# FASCICULE DE BREVET EUROPEEN

(11) **EP 0 565 471 B1**
(45) Date de publication et mention de la délivrance du brevet: **11.03.1998**
(21) Numéro de dépôt: 93470009.7
(22) Date de dépôt: 26.03.1993
(51) Int. Cl.: A61C 17/20

(54) **Détartreur vibrant pour dentisterie**
Schwingender Zahnsteinentferner
Vibrating dental sealer

(30) Priorité: 06.04.1992 FR 9204328
(43) Date de publication de la demande: 13.10.1993
(73) Titulaire: MICRO MEGA S.A., F-25000 Besançon (FR)
(72) Inventeur: Euvrard, Hubert, F-25870 Geneuille (FR)
(74) Mandataire: Poupon, Michel

(56) Documents cités:
- EP-A- 0 221 460
- WO-A-90/15580
- DE-B- 1 100 424

## Description

La présente invention se rapporte au domaine des détartreurs mécanisés utilisés en dentisterie, et plus particulièrement au domaine des détartreurs vibrants dont la vibration est par exemple obtenue au moyen de dispositifs pneumatiques.

De multiples modes de réalisation de détartreurs pneumatiques sont actuellement connus, par exemple ceux décrits dans les brevets US 3 811 190 et sa re-issue Re 29687 ainsi que FR 2 525 893 et FR 2 505 172.

De façon générale, ces détartreurs sont des produits coûteux et, bien que des dispositifs de connexion rapide aux cordons de l'unité dentaire aient été développés, ils requièrent de la part du dentiste, lorsqu'il veut changer de curette en fonction du travail à exécuter, de démonter la curette le plus souvent fixée par vissage, et de la remplacer par celle qui convient au travail à venir.

Il en résulte une perte de temps importante. De plus, le démontage et le remontage des curettes présente des risques de contamination croisée non négligeable, par exemple par le risque de piqûre du dentiste ou de son assistante lors du dévissage de la curette.

La présente invention a pour objet de proposer un détartreur ou un jeu de détartreurs permettant de résoudre les inconvénients précités, en particulier en supprimant l'obligation de démontage des curettes, et dont la réalisation économique permet au praticien de disposer d'un jeu de détartreurs pourvus chacun d'une curette correspondant au travail à réaliser.

Plus précisément, l'invention concerne un détartreur constitué d'un corps comprenant à son extrémité proximale un dispositif de type connu pour le raccordement rapide au cordon de l'unité dentaire et sortant de son extrémité distale une curette de détartrage et en son intérieur un dispositif de génération de vibrations et dont le corps du détartreur possède un logement interne recevant l'ensemble constitué par le dispositif de vibration avec sa curette et de ses suspensions et du dispositif de connexion rapide et du dispositif d'arrosage de la curette faisant partie intégrante du dispositif de transmission des vibrations ne pouvant pas en être démontée, comme décrit dans le brevet WO-A-9015580, caractérisé en ce que l'ensemble constitué par le dispositif de vibration avec sa curette et de ses suspensions et du dispositif de connexion rapide et du dispositif d'arrosage de la curette peut être introduit entièrement monté à l'intérieur du corps par son extrémité proximale.

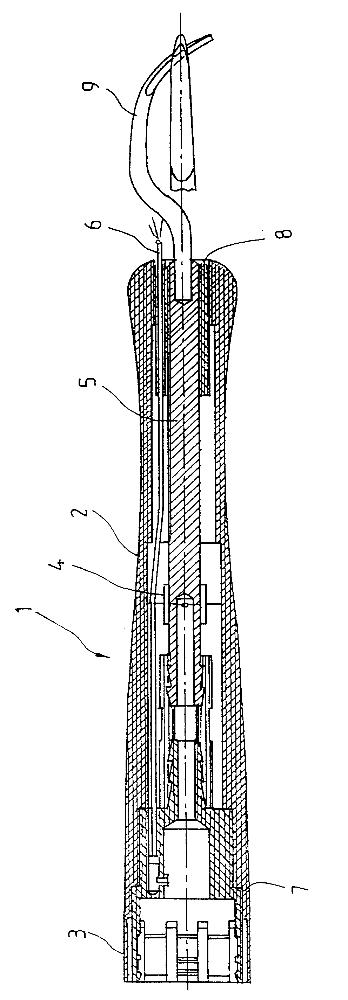

On comprendra mieux l'invention à l'aide de la description faite ci-après d'un mode de mise en oeuvre, donné à titre d'exemple non limitatif, en référence à la figure unique annexée qui est une vue en élévation latérale en coupe longitudinale d'un détartreur conforme à l'invention.

On ne décrira pas en détails les éléments du détartreur qui appartient à l'état de la technique.

Le détartreur, généralement référencé (1), comporte un corps allongé (2) servant de poignée de préhension par le praticien. Il est raccordé à son extrémité proximale (3) de manière connue, par un dispositif de raccordement rapide, au cordon d'alimentation de l'unité dentaire.

Il comporte intérieurement un dispositif (4) de génération de vibrations de type classique.

Selon une caractéristique essentielle de l'invention, le dispositif (4) est relié de manière non démontable par l'utilisateur à la curette de détartrage (9) disposée en partie distale du corps (1).

La curette sera reliée au dispositif (4) par un organe de transmission des vibrations (5), avec lequel elle formera une structure de préférence monobloc. Elle pourra y être supportée par exemple par soudure ou brasage.

Ainsi chaque détartreur peut être muni d'une curette spécifique. On peut donc présenter un ensemble de détartreurs conformes à l'invention, chacun ayant une curette spécifique à chaque type de travaux à réaliser. Selon une variante de mise en oeuvre, la curette sera chassée dans un alésage pratiqué à la partie distale de l'organe de transmission (5).

Le maintien sera obtenu par exemple en chassant le dispositif de raccordement rapide à l'intérieur du corps dans un logement (7) situé à son extrémité proximale.

On ne sortirait pas du cadre de l'invention en réalisant la fixation par soudure, par exemple par ultra-sons.

Pour limiter les prix de revient le dispositif de raccordement et/ou le corps (2) seront réalisés en matière plastique compatible avec les différentes contraintes d'utilisation et de stérilisation éventuelle.

En variante avantageuse, le corps (2) sera réalisé en élastomère et le manchon de suspension distale (8) sera venu de matière avec ledit corps.

## Revendications

1. Détartreur (1) constitué d'un corps (2) comprenant à son extrémité proximale (3) un dispositif de type connu pour le raccordement rapide au cordon de l'unité dentaire et sortant de son extrémité distale une curette de détartrage et en son intérieur un dispositif (4) de génération de vibrations et dont le corps (2) du détartreur possède un logement (7) interne recevant l'ensemble constitué par le dispositif (4) de vibration avec sa curette et de ses suspensions et du dispositif de connexion rapide et du dispositif d'arrosage (6) de la curette (9) faisant partie intégrante du dispositif de transmission des vibrations (5) ne pouvant pas en être démontée, caractérisé en ce que l'ensemble constitué par le dispositif de vibration (4) avec sa curette (9) et de ses suspensions et du dispositif de connexion rapide et du dispositif d'arrosage (6) de la curette (9) peut être introduit entièrement monté à l'intérieur du corps par son extrémité proximale (3).

2. Détartreur (1) selon la revendication 1, caractérisé en ce que la curette est réalisée de façon monobloc avec l'organe de transmission des vibrations (5).

3. Détartreur (1) selon l'une des revendications 1 à 2, caractérisé en ce que la curette (9) est rapportée par soudage ou brasage à l'organe de transmission de la vibration (5).

4. Détartreur (1) selon l'une quelconque des revendications 1 à 2, caractérisé en ce que la curette (9) est chassée dans un alésage pratiqué à la partie distale de l'organe de transmission des vibrations.

5. Détartreur (1) selon l'une quelconque des revendications 1 à 4, caractérisé en ce que l'ensemble constitué par le dispositif de vibration (4) avec sa curette (9) et de ses suspensions et du dispositif de connexion rapide et du dispositif d'arrosage (6) de la curette (9) est maintenu solidaire du corps par chassage du dispositif de raccordement rapide à l'intérieur du corps dans un logement (7) situé à son extrémité proximale (3).

6. Détartreur (1) selon l'une quelconque des revendications 1 à 4, caractérisé en ce que l'ensemble constitué par le dispositif de vibration (4) avec sa curette (9) et de ses suspensions et du dispositif de connexion rapide et du dispositif d'arrosage (6) de la curette (9) est fixé par soudage, par exemple par ultra-sons, du dispositif de raccordement rapide dans le corps.

7. Détartreur (1) selon l'une quelconque des revendications 1 à 6, caractérisé en ce que le dispositif de raccordement rapide est réalisé en matière plastique.

8. Détartreur (1) selon l'une quelconque des revendications 1 à 7, caractérisé en ce que le corps est réalisé en matière plastique.

9. Détartreur (1) selon l'une quelconque des revendications 1 à 8, caractérisé en ce que le corps extérieur est réalisé en une matière élastomère et que le manchon de suspension distale (8) fait partie du corps.

## Claims

1. Scaling tool (1), constituted by a body (2) comprising, at its near end (3), a device of known type for rapid connection to the flex of the dental unit and, emerging from its distal end, a scaling curette and, in its interior, a vibration generating device (4) and wherein the body (2) of the scaling tool has an internal housing (7) accommodating the assembly, which is constituted by the vibration device (4) with its curette and its suspensions and the rapid connection device and the spraying device (6) of the curette (7) and forms an integral part of the vibration transmitting device (5) which cannot be detached therefrom, characterised in that the assembly, constituted by the vibration device (4) with its curette (9) and its suspensions and the rapid connection device and the spraying device (6) of the curette (9), may be introduced, entirely assembled, into the interior of the body by its near end (3).

2. Scaling tool (1) according to claim 1, characterised in that the curette is formed as one piece with the vibration transmitting member (5).

3. Scaling tool (1) according to one of claims 1 to 2, characterised in that the curette (9) is attached, by welding or hard-soldering, to the vibration transmitting member (5).

4. Scaling tool (1) according to any of claims 1 to 2, characterised in that the curette (9) is force-fitted in a groove formed in the distal portion of the vibration transmitting member.

5. Scaling tool (1) according to any of claims 1 to 4, characterised in that the assembly, constituted by the vibration device (4) with its curette (9) and its suspensions and the rapid connection device and the spraying device (6) of the curette (9), is kept integral with the body as a result of the rapid connection device being force-fitted into the interior of the body in a housing (7) situated at its near end (3).

6. Scaling tool (1) according to any of claims 1 to 4, characterised in that the assembly, constituted by the vibration device (4) with its curette (9) and its suspensions and the rapid connection device and the spraying device (6) of the curette (9), is secured by welding, for example by ultrasound, the rapid connection device in the body.

7. Scaling tool (1) according to any of claims 1 to 6, characterised in that the rapid connection device is formed from plastics material.

8. Scaling tool (1) according to any of claims 1 to 7, characterised in that the body is formed from plastics material.

9. Scaling tool (1) according to any of claims 1 to 8, characterised in that the exterior body is formed from an elastomeric material, and in that the distal suspension sleeve (8) forms part of the body.

## Patentansprüche

1. Zahnsteinentferner (1) bestehend aus einem Rumpfteil (2), das an seinem proximalen Ende (3) eine vorbekannte Vorrichtung zum schnellen Anschluß an das Zahngerätekabel, ein aus seinem distalen Ende herausragendes Schabteil zum Entfernen von Zahnstein und in seinem Inneren einen Schwingungsgenerator (4) aufweist, wobei das Rumpfteil (2) des Zahnsteinentferners über eine innere Ausnehmung (7) zum Aufnehmen der aus der Schwingungsvorrichtung (4) mit ihrem Schabteil, ihren Lagerungen, der Schnellverbindungsvorrichtung und der Sprengvorrichtung (6) des Schabteils (9) bestehenden Anordnung verfügt, die einen integrierenden Bestandteil der von dieser nicht abbaubaren Schwingungsübertragungsvorrichtung (5) bildet, **dadurch gekennzeichnet**, daß die aus der Schwingungsvorrichtung (4) mit ihrem Schabteil (9), ihren Lagerungen, der Schnellverbindungsvorrichtung und der Sprengvorrichtung (6) des Schabteils (9) bestehende Anordnung vollständig zusammengebaut in das Innere des Rumpfteils an dessen proximalem Ende (3) einführbar ist.

2. Zahnsteinentferner (1) nach Anspruch 1, dadurch gekennzeichnet, daß das Schabteil (9) einstückig mit der Schwingungsübertragungseinrichtung (5) verbunden ist.

3. Zahnsteinentferner (1) nach einem der Ansprüche 1 oder 2, dadurch gekennzeichnet, daß das Schabteil (9) durch Löten oder Schweißen mit der Schwingungsübertragungseinrichtung (5) verbunden ist.

4. Zahnsteinentferner (1) nach irgendeinem der Ansprüche 1 oder 2, dadurch gekennzeichnet, daß das Schabteil (9) in eine zweckmäßige Bohrung an dem distalen Teil der Schwingungsübertragungseinrichtung eingetrieben ist.

5. Zahnsteinentferner (1) nach irgendeinem der Ansprüche 1 bis 4, dadurch gekennzeichnet, daß die aus der Schwingungsvorrichtung (4) mit ihrem Schabteil (9), ihren Lagerungen, der Schnellverbindungsvorrichtung und der Sprengvorrichtung (6) des Schabteils (9) bestehende Anordnung zusammen fest von dem Rumpfteil durch Einfügen der Schnellverbindungsvorrichtung in das innere des Rumpfteils in eine an dessen proximalem Ende (3) angeordnete Ausnehmung (7) gehalten ist.

6. Zahnsteinentferner (1) nach irgendeinem der Ansprüche 1 bis 4, dadurch gekennzeichnet, daß die aus der Schwingungsvorrichtung (4) mit ihrem Schabteil (9), ihren Lagerungen, der Schnellverbindungsvorrichtung und der Sprengvorrichtung (6) des Schabteils (9) bestehende Anordnung durch Schweißen, beispielsweise mit Ultraschall, der Schnellverbindungsvorrichtung in dem Rumpfteil befestigt ist.

7. Zahnsteinentferner (1) nach irgendeinem der Ansprüche 1 bis 6, dadurch gekennzeichnet, daß die Schnellverbindungsvorrichtung aus Kunststoffmaterial hergestellt ist.

8. Zahnsteinentferner (1) nach irgendeinem der Ansprüche 1 bis 7, dadurch gekennzeichnet, daß das Rumpfteil aus Kunststoffmaterial hergestellt ist.

9. Zahnsteinentferner (1) nach irgendeinem der Ansprüche 1 bis 8, dadurch gekennzeichnet, daß das äußere Rumpfteil aus einem elastomeren Material hergestellt ist und daß die Muffe der distalen Lagerung (8) Teil des Rumpfteils ist.
